# EUROPEAN PATENT SPECIFICATION

(11) **EP 3 022 969 B1**
(45) Date of publication and mention of the grant of the patent: **02.10.2019**
(21) Application number: 14826271.0
(22) Date of filing: 18.07.2014
(51) Int. Cl.: H04W 48/14

(54) **METHOD AND SYSTEM FOR PROVIDING MULTIPLE SERVICE DISCOVERY IN A WIRELESS ENVIRONMENT**
VERFAHREN UND SYSTEM ZUR ENTDECKUNG MEHRERER DIENSTE IN EINER DRAHTLOSEN UMGEBUNG
PROCÉDÉ ET SYSTÈME DE FOURNITURE D'UNE DÉCOUVERTE DE MULTIPLES SERVICES DANS UN ENVIRONNEMENT SANS FIL

(30) Priority: 18.07.2013 IN 3216CH2013; 23.06.2014 IN CH32162013
(43) Date of publication of application: 25.05.2016
(73) Proprietor: Samsung Electronics Co., Ltd., Gyeonggi-do 16677 (KR)
(72) Inventor: SRINIVASA GOPALAN, Karthik, Bangalore 560037 (IN); PATIL, Mayuresh Madhukar, Bangalore 560037 (IN); LEE, Jong-Hyo, Hwaseong-si Gyeonggi-do 445-320 (KR)
(74) Representative: HGF Limited
(86) International application number: PCT/KR2014/006530
(87) International publication number: WO 2015/009097

(56) References cited:
- WO-A1-2011/053884
- WO-A1-2012/127095
- KR-A- 20070 069 800
- KR-A- 20090 014 208
- US-A1- 2007 141 988
- US-A1- 2009 285 119
- US-A1- 2009 287 827
- US-A1- 2010 235 525
- US-A1- 2011 153 818
- US-A1- 2013 094 484

## Description

### Technical Field

The embodiments herein generally relate to wireless communication systems and more particularly relates to a method and apparatus for providing multiple service discovery in a wireless environment.

### Background Art

Wireless communication technologies such as Bluetooth, Infrared and the like, enable devices to communicate wirelessly over a relatively short range, e.g., less than 100 meters. To discover other wireless devices in the range, a device broadcasts wireless messages and wait for responses to the wireless messages from other devices. If another device is discovered, a wireless connection may be established between the devices. Once a connection is established, devices may exchange various types of information. For example, devices may exchange information related to providing a service, for instance, printing, headset connectivity, PDA synchronization, etc. provided by one of the devices.

Currently, Wireless Fidelity (Wi-Fi) alliance has defined an Application Service Platform which allows services to advertise itself and be discoverable over the air. Further the Wi-Fi specification allows adding multiple hash values in case the device support multiple services. The service hash values are generally 6 bytes in size.

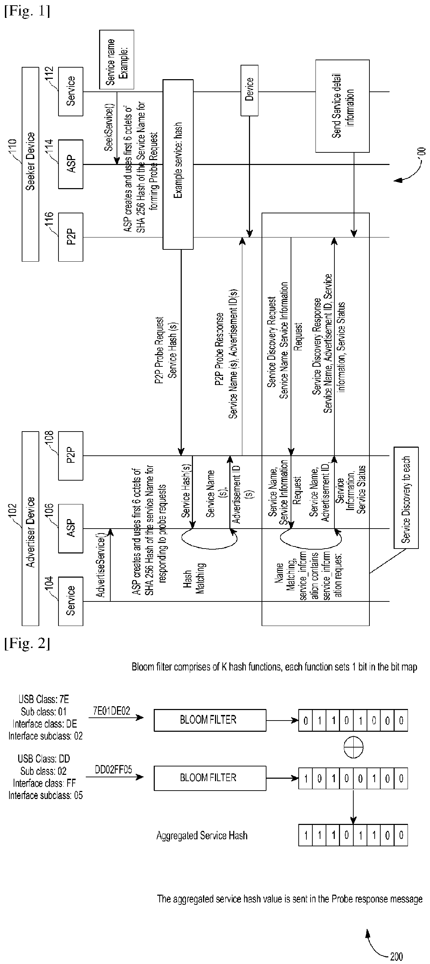

As shown in Figure 1, an individual service 104 in an advertiser device 102 advertises itself to an Application service platform (ASP) 106 in the advertiser device 102 with a full reverse Domain Name System (DNS) service name. On the other hand, a service 112 in a seeker device 110 can seek a service by sending a Seek Service Primitive which includes requested service name to be searched on the air to an ASP 114 of the seeker device 110. The ASP 114 then triggers a Probe Request message which consists of a service hash attribute. The ASP 114 calculates the service hash value for the requested service name using a 256 SHA 1 algorithm. After the service hash value for the service name is calculated, first 6 bytes are sent over the air in the Probe Request message.

When the advertiser device 102 receives the Probe Request message, the advertiser device 102 matches the received service hash value with a service hash value of one or more registered service names. Once a match is found, the advertiser device 102 sends a Probe Response message to the seeker device 110. The Probe Response message includes the matched full service name. Once the seeker device 110 receives the probe response message where the device discovery is completed, the seeker device 110 identifies the advertiser device 102 and the supported service 104. The seeker device 110 then needs to do service discovery with the all the searched devices in order to find out the detail information about the service. At this point of time, the seeker device 110 sends a Service discovery Generic Advertisement Service (GAS) request requesting details of the service 104. The advertiser device 102 then responds to the service discovery GAS request in a GAS response. The GAS response includes the details of the services (e.g., for send service, the response includes role of the devices such as a transmitter or a receiver, a serviced version number etc.)

Currently, wireless serial bus (WSB) is being developed to support universal serial bus (USB) over a Wi-Fi network. The procedure for performing device discovery, service discovery and connection over a Wi-Fi Direct network is as defined in the Wi-Fi standards. The WSB has defined three kinds of architecture elements which includes a host, a client and hub services (role). The advertiser device 102 and the seeker device 110 can take any kind of the role during a WSB session. However, one WSB session supports only one host role.

The conventional USB architecture requires an USB class, a USB subclass and an interface to be exchanged during a service discovery mechanism. But, current ASP architecture necessitates the seeker device to do a service discovery of all USB devices to find out the USB device within the particular device class. This requires too much information exchange over the air. Moreover, if a single USB device supports the multiple USB classes, which may be the case in the high end devices like smart phones and tablets, the seeker device may require a substantial amount of hash information to be sent during the device discovery to represent this information in the service hash, thereby leading to unnecessary service discovery message exchange between the seeker device and advertiser device.

US 2010/235525 A1 discusses techniques for discovering and advertising services. US 2011/153818 A1 discusses a local device which broadcasts an advertisement in a wireless network. US 2007/141988 A1 discusses discovery of services between devices. WO 2011/053884 A1 discusses exploiting the multi-site property of P2P wireless networks to attempt to improve discovery of devices. US 2013/094484 A1 discusses a method for discovery of wireless networks. WO 2012/127095 A1 discusses an apparatus which transmits a message to detect one or more wireless communication devices.

### Disclosure of Invention

### Technical Problem

In view of the foregoing, there is a need for a method and apparatus for enabling device discovery which can avoid the unnecessary message flow over the air in a wireless environment.

### Solution to Problem

The various aspects herein provide a method according to claim 1.

According to an embodiment of the present invention, the method further comprises of identifying an advertiser device type based on the class information and the sub class information associated with the advertiser device, and displaying the identified advertiser device type on a display screen of the seeker device.

According to an embodiment of the present invention, the method of generating, by the seeker device, the probe request containing the class information and the sub class information of the one or more associated advertiser devices comprises of defining a set of service names corresponding to a plurality of services available at one or more advertiser devices, generating a hash set for each of the defined set of service names, wherein the hash set comprises at least one of the defined service name, a class codes and a sub class cods corresponding to the one or more advertiser devices and appending the generated hash set in the probe request.

According to an embodiment of the present invention, the method of generating a hash set for each of the defined set of service names comprises of generating a bit map of a predefined hash set for each class and sub class of the one or more advertiser devices; and inputting the generated bit map of the predefined hash sets to a bloom filter; performing a logic function between each of the generated bit maps corresponding to the one or more advertiser devices; and outputting, by the bloom filter, a resultant bit map which is an aggregated hash value corresponding to a second hash value.

According to an embodiment of the present invention, the second hash value corresponds to a sequence of hash pairs of a service name and a hash pair of a class and sub class associated with each of the one or more advertiser devices.

According to an embodiment of the present invention, the hash pairs include the hash values listed in a predetermined sequence.

According to an embodiment of the present invention, the method of generating a hash set for each of the defined set of service names further comprises of creating a hash set comprising a reverse domain name system (DNS) service name along with device role, a class code and a sub class code as a string of information.

According to an embodiment of the present invention, the probe response comprises of a service name along with an advertiser device role; a class information string including the class code and sub class code, and an advertise service attribute element providing information for the service offered by the advertiser device.

Aspects herein further disclose a method according to claim 9.

Aspects herein further disclose an apparatus of a seeker device according to claim 10.

Aspects herein further disclose an apparatus of an advertiser device according to claim 12.

The foregoing has outlined, in general, the various aspects of the invention and is to serve as an aid to better understanding the more complete detailed description which is to follow. In reference to such, there is to be a clear understanding that the present invention is not limited to the method or application of use described and illustrated herein. It is intended that any other advantages and objects of the present invention that become apparent or obvious from the detailed description or illustrations contained herein are within the scope of the present invention as defined by the appended claims.

### Brief Description of Drawings

The other objects, features and advantages will occur to those skilled in the art from the following description of the preferred embodiment and the accompanying drawings in which:
**Figure 1** is a flow diagram illustrating an exemplary method for providing multiple service discovery in a wireless environment, according to prior art.
**Figure 2** is a schematic representation illustrating an exemplary method of generating hash values using bloom filter, according to an embodiment of the present invention.
**Figure 3** is a flow diagram illustrating an exemplary method for providing multiple service discovery in a wireless environment, according to an embodiment of the present invention.
**Figure 4** is a schematic representation illustrating an exemplary probe request frame, according to an embodiment of the present invention.
**Figure 5** is a schematic representation illustrating an exemplary probe request frame, according to another embodiment of the present invention.
**Figure 6** is a schematic representation illustrating an exemplary probe request frame, according to yet another embodiment of the present invention.
**Figure 7** is a block diagram of an exemplary wireless communication system, according to an embodiment of the present invention.

Although specific features of the present invention are shown in some drawings and not in others, this is done for convenience only as each feature may be combined with any or all of the other features in accordance with the present invention.

### Mode for the Invention

The present invention provides a method and apparatus for discovering multiple support devices in a wireless environment. In the following detailed description of the embodiments of the invention, reference is made to the accompanying drawings that form a part hereof, and in which are shown by way of illustration specific embodiments in which the invention may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the appended claims.

The present invention provides an optimized method and system for providing multiple service discovery in a wireless environment using connection technologies such as Wi-Fi. The embodiments herein allow a seeker device to identify type of advertiser device using actual class and sub class information exchanged during the service discovery. The embodiments herein further allows the service discovery mechanism for aggregating multiple class information associated with a plurality of advertiser devices into a single hash set, thereby minimizing the information sent across the air. The applicability of the methods disclosed herein is not limited to Wi-Fi or USB.

The present invention further provides for optimizing service discovery for serial bus connection which enables the seeker device to discover the actual class and subclass of the advertiser device during the service discovery. The service discovery mechanism herein comprises of two message exchanges comprising of probe request and probe response between the seeker device and the advertiser device.

**Figure 2** is a schematic representation illustrating an exemplary method of generating hash values using bloom filter 201, according to an embodiment of the present invention. According to Figure 2, a plurality of hash pairs are defined in a service hash attribute in a probe request. A hash pair is defined by providing service names for WSB architecture element. A hash value of a particular service name is generated using a hash algorithm defined in Wi-Fi Direct service. For example, hash values for different service names include org.wifi.wsb.host, org.wifi.wsb.client, and org.wifi.wsb.hub. Then, a bit map is generated from a bloom filter 201 with K predefined hash values for class and sub class string of each wireless device. The method of generating the bit map is as follows. The bloom filter 201 comprises of k hash functions. The inputs to these hash functions are the service name strings and the class and sub class information of the advertiser devices. Each of the hash functions sets 1 bit in the hash map, thereby creating a k bit code. The aggregation of the service hash corresponds to the XORing of the bloom filter values. For example, the bit map is generated for each USB class 1 byte, USB sub class 1 byte, interface class 1 byte and interface sub class 1 byte together. The 4^{th} byte of information is sent to the bloom filter 201. This bit map is generated for the each of the USB class and interface classes. The bit map corresponding to respective USB class and sub class are XORed to generate a single bit map corresponding to an aggregated hash value as a second hash value.

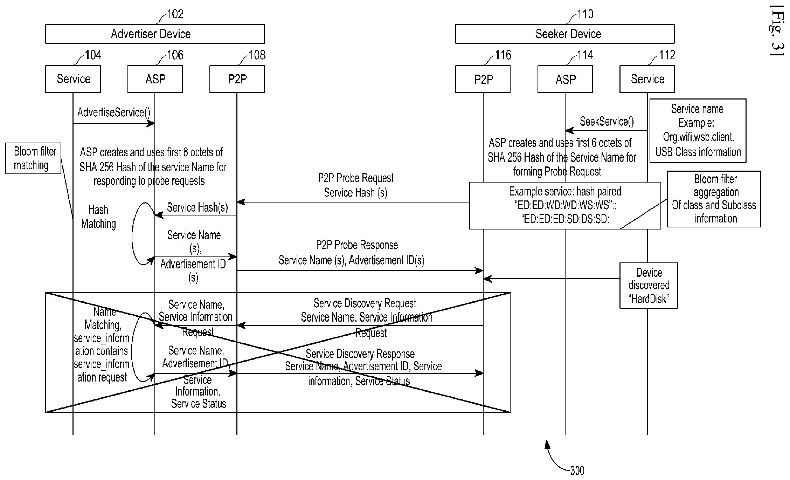

**Figure 3** is a flow diagram illustrating an exemplary method for discovering multiple service devices in a wireless environment, according to an embodiment of the present invention. According to **Figure 3**, a connection is established between the advertiser device 102 and the seeker device 110 through Wi-Fi P2P interfaces. the service process 104 associated with the advertiser device 102 advertises a service(s) to the ASP 106 by an AdvertiseService command so that the seeker device 110 may discover an ASP session related to the advertised service(s). When an application is executed and a service use command is generated to transmit a specific file in the seeker device 110, a service process 112 of the seeker device 110transmits a SeekService command requesting service discovery along with USB class information to the ASP 114 of the seeker device 110. The ASP 110 generates a hash value for the received service name and other relevant hash values and appends the generated hashes in a P2P probe request. The ASP 114 of the seeker device 110 then transmits the generated a P2P Probe Request with a hash value generated based on the service name and the USB class and sub class information to the ASP 106 of the advertiser device 102. The ASP 106 of the advertiser device 102 A judges whether the hash value of the service name to be advertised and the USB class information associated with the advertiser device 102 are matched to the hash value and the USB class information received in the P2P Probe Request. If the hash values and the USB class information matches, then the ASP 106 of the advertiser device 102 transmits a P2P Probe Response to the ASP 114 of the seeker device 110. The P2P Probe Response may include a string value indicating the service name confirmed by hash matching, the matched USB class information and the advertisement ID of the service to be advertised from the advertiser device 102. Upon receiving the probe response, the service process of the seeker device 110 identifies the type of the device discovered based on the received class and sub class information associated with the advertiser device 102 and displays the service accordingly on a user interface of the seeker device 110.

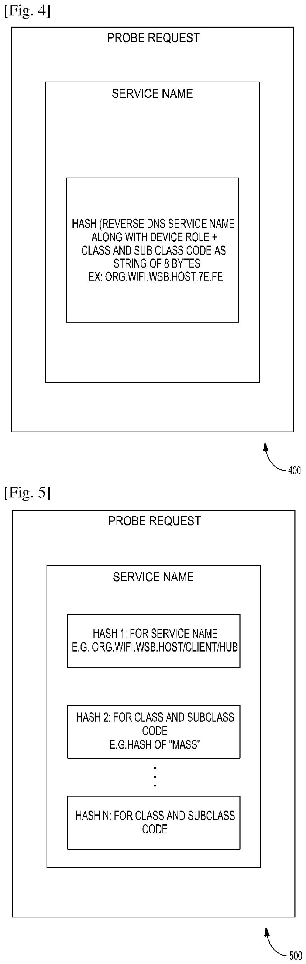

**Figure 4** is a schematic representation illustrating an exemplary probe request frame, according to an embodiment of the present invention. According to **Figure 4**, a service name is created by appending the sub class information converted to a string format. This corresponds to an 8 byte of information. Later, a hash value for the entire appended string is generated and included in the probe request. Hence, the probe request comprises of a hash value of reverse DNS service name along with device role and class and sub class code as a string of 8 bytes of information in the service hash attribute. The probe request has a single hashing function comprising the class and subclass information in a string format.

**Figure 5** is a schematic representation illustrating an exemplary probe request frame, according to another embodiment of the present invention. According to Figure 5, a service name is created and a hash value for the service name is generated. This corresponds to a 4 byte of information. The remaining 4 byte of information corresponds to a particular sequence of hash pairs for a plurality of class and sub class code. Hence, the probe request comprises of a list of hash values appended in a particular sequence in the service hash attribute wherein the first hash corresponds to a hash for service name, and the consecutive hashes corresponds to class and sub class code of a particular advertiser device.

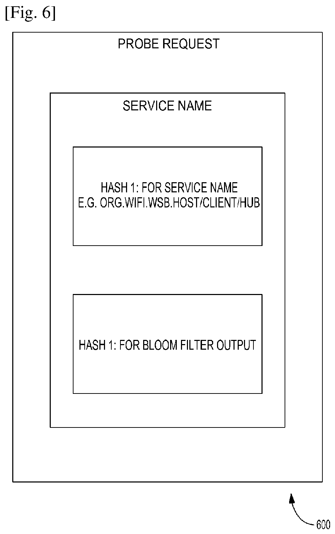

**Figure 6** is a schematic representation illustrating an exemplary probe request frame, according to yet another embodiment of the present invention. According to **Figure 6**, a set of service names corresponding to a plurality of services available at a plurality of advertiser devices are defined. Further, a hash value corresponding to a bloom filter output is generated (as described above) and is appended into the probe request. Hence, the probe request comprises of two hash pairs, one corresponding to a hash for a predefined service name and a hash for bloom filter output in the service hash attribute.

According to an embodiment of the present invention, the probe response comprises of a full name of service along with device role and 8 byte string including the class and the sub class code. The probe response alternatively comprises of a new attribute element advertise service descriptor in the "Advertise service attribute" in place of bloom filter hash as a part of service name.

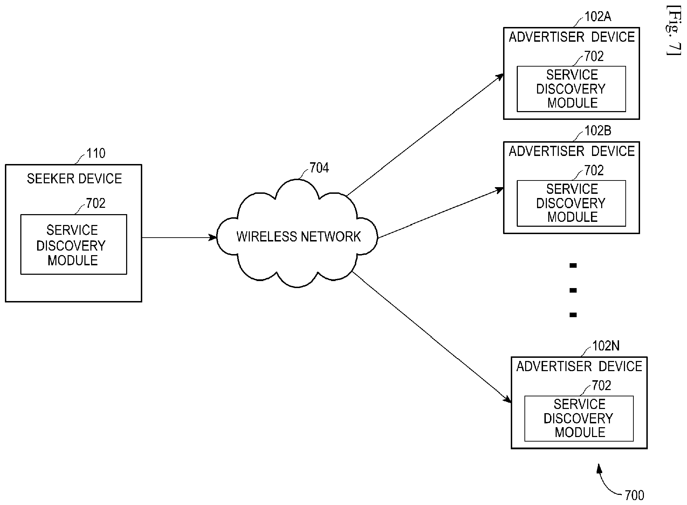

**Figure 7** is a block diagram of an exemplary wireless communication system 700, according to an embodiment of the present invention. **Figure 7** and the following discussion are intended to provide a brief, general description of the suitable computing environment in which certain embodiments of the inventive concepts contained herein may be implemented.

The wireless communication system 700 comprises at least one seeker device 110, a plurality of advertiser devices 102 and a wireless network 706. The seeker device 110 and the plurality of advertiser devices are wirelessly connected through the wireless network 706. According to **Figure 7**, the seeker device 110 comprises of a service discovery module 702 and a control unit 704. The seeker device 110 generates a probe request and transmits the probe request for service discovery to one or more advertiser devices of the plurality of advertiser devices. Here the probe request comprises a class information and a sub class information of a plurality of advertiser devices. Further, the advertiser device 102 comprises of a service discovery module 702 and a control unit 704. The advertiser device 102 then transmits a probe response to the seeker device.

The seeker device 110 and the advertiser device 102 may include one or more hardware components in conjunction with the service discovery module 702 such as a processor, memory, a removable storage, and a non-removable storage, a bus and a network interface. The functionalities of these hardware components are not mentioned in detail as it is well known to a person skilled in the art. Further, the seeker device 110 and the advertiser device 102 may include or have access to one or more user input devices, one or more output devices, and one or more communication connections such as a network interface card or a universal serial bus connection. The one or more user input devices may be keyboard, mouse, and the like. The one or more output devices may be a display. The communication connections may include mobile networks such as General Packet Radio Service (GPRS), Wireless Fidelity (Wi-Fi®), Worldwide Interoperability for Microwave Access (WiMax), Long Term Evolution (LTE), and the like.

The service discovery module 702 supports Internet Protocol (IP) based wireless communication for the Wi-Fi devices such as the seeker device 110 and the advertiser device 102 and is configured for transmitting and receiving various frames such as probe request frame, probe response frame, and so on. The control unit 704 controls the overall operation of the seeker device 110 and the advertiser device 102. More particularly, the control unit 704 controls an operation to generate a probe request containing class and sub class information of a plurality of advertiser devices 102, identify type of the advertiser devices 102 based on the received class and sub class information associated with the advertiser device 102 and to display the type of the identified advertiser device 102 on a display screen of the seeker device 110. The control unit 704 further is adapted for defining a set of service names corresponding to a plurality of services available at one or more advertiser devices 102, generating a hash set for each of the defined set of service names, wherein the hash set comprises of a defined service name, class codes and sub class codes corresponding to at least one of the advertiser devices 102, and appending the generated hash set in the probe request. In addition, the control unit 704 may control regular operations of the seeker device 110 and the advertiser device 102. For example, when an application using mobile communication is executed, the control unit 704 may control operations related to mobile communication. When an application using a local network is executed, the control unit 704 may control operations related to local networking.

The Wi-Fi device of an exemplary embodiment of the present disclosure may be any form of information and communication appliance, such as a mobile communication terminal supporting a communication protocol for a communication system, a smart phone, a Portable Multimedia Player (PMP), a digital broadcast receiver, a Personal Digital Assistant (PDA), a music player such as a Moving Picture Experts Group (MPEG)-1 or MPEG-2 audio layer 3 (MP3) player or a portable game console. The Wi-Fi device of an exemplary embodiment of the present invention may be applied to medium to large sized devices such as a television set, a large format display, digital signage, a media kiosk, a personal computer, a laptop, a printer, a multifunction office machine, etc.

The embodiments herein enable a Wi-Fi device to discover multiple support devices in a wireless environment. The present invention allows directed search for a user of a Wi-Fi device to search plurality of Wi Fi devices using particular USB class information. The present invention also provides an optimized method of generating a single hash function for a string of service information and hence reducing the need of a separate service discovery mechanism.

The present embodiments have been described with reference to specific example embodiments. It will be evident that various modifications and changes may be made to these embodiments. Furthermore, the various devices, modules, and the like described herein may be enabled and operated using hardware circuitry, firmware, and/or software embodied in a machine readable medium. Although the embodiments herein are described with various specific embodiments, it will be obvious for a person skilled in the art to practice the invention with modifications. However, all such modifications are deemed to be within the scope of the claims. It is also to be understood that the following claims are intended to cover all of the generic and specific features of the embodiments described herein and all the statements of the scope of the embodiments which as a matter of language might be said to fall there between.

## Claims

1. A method of a seeker device (110) for providing service discovery in a wireless Universal Serial Bus, communication system (700), the method comprising the steps of:
generating, by the seeker device, a probe request (400; 500; 600) for service discovery, the probe request including hash pairs for a service that the seeker device is searching for, wherein the hash pairs include multiple hash values corresponding to a service name, USB class information and sub class information of the service to identify at least one advertiser device at which the service is available;
transmitting, by a wireless broadcasting transmitter of the seeker device, the probe request; and
receiving, by a wireless receiver of the seeker device, at least one probe response from the at least one advertiser device which has a hash set matching the hash pairs in the probe request,
**characterized in that** the probe response includes information regarding the hash pairs in the probe request.

2. The method of claim 1, further comprising:
identifying an advertiser device type of the at least one advertiser device (102), based on the USB class information and the sub class information associated with the at least one advertiser device; and
displaying the identified advertiser device type on a display screen of the seeker device (110).

3. The method of claim 1, wherein generating the probe request (400; 500; 600) comprises of:
defining a set of service names corresponding to a plurality of services available at the at least oneadvertiser device (102);
generating a hash set for each of the defined set of service names, wherein the hash set includes at least one of the defined service name, a USB class code, and a sub class code corresponding to the at least one advertiser device; and
appending the generated hash set in the probe request.

4. The method of claim 3, wherein generating the hash set for each of the defined set of service names comprises:
generating a bit map of a predefined hash set for each USB class and sub class of the at least one advertiser device;
inputting the generated bit map of the predefined hash sets to a bloom filter;
performing a logic function between each of the generated bit maps corresponding to the at least one advertiser device (102); and
receiving, from the bloom filter, a resultant bit map that is an aggregated hash value corresponding to a second hash value.

5. The method of claim 4, wherein the second hash value corresponds to a sequence of hash values of a service name and USB class and sub class associated with each of the at least one advertiser device (102).

6. The method of claim 3, wherein the hash pairs include the hash values listed in a predetermined sequence.

7. The method of claim 3, wherein generating the hash set for each of the defined set of service names comprises creating a hash set including a reverse domain name system, DNS, service name with a device role, a USB class code and a sub class code as a string of information.

8. The method of claim 1, wherein the probe response comprises:
a service name with an advertiser device role;
a class information string including a USB class code and a sub class code, and
an advertise service attribute element providing information for the service offered by the at least one advertiser device (102).

9. A method of an advertiser device (102) for providing at least one service in a wireless Universal Serial Bus communication system (700), the method comprising the steps of:
receiving, by a wireless receiver of the advertiser device from a seeker device (110), a probe request (400; 500; 600) for service discovery, the probe request including hash pairs for a service that the seeker device is searching for, wherein the hash pairs include multiple hash values corresponding to a service name, USB class information and sub class information of the service to identify at least one advertiser device at which the service is available;
confirming whether a service available at the advertiser device and the hash pairs in the received probe request are matched; and
transmitting, by a wireless transmitter of the advertiser device, at least one probe response to the seeker device, when the service available at the advertiser device and the hash pairs in the received probe request are matched,
**characterized in that** the probe response includes information regarding the hash pairs in the probe request.

10. An apparatus of a seeker device (110) for performing service discovery in a wireless Universal Serial Bus communication system (700), the apparatus comprising:
a controller configured to generate a probe request (400; 500; 600) for service discovery, the probe request including hash pairs for a service that the seeker device is searching for, wherein the hash pairs include multiple hash values corresponding to a service name, USB class information and sub class information of the service to identify at least one advertiser device at which the service is available;
a broadcasting transmitter configured to transmit the probe request; and
a receiver configured to receive at least one probe response from the at least one advertiser device which has a hash set matching the hash pairs in the probe request,
**characterized in that** the probe response includes information regarding the hash pairs in the probe request.

11. The apparatus of claim 10, adapted to operate according to any one of claims 2 to 8.

12. An apparatus of an advertiser device (102) for providing at least one service in a wireless Universal Serial Bus communication system (700), wherein the apparatus comprises:
a wireless receiver configured to receive from a seeker device (110) a probe request (400; 500; 600) for service discovery, the probe request including hash pairs for a service that the seeker device is searching for, wherein the hash pairs include multiple hash values corresponding to a service name, USB class information and sub class information of the service to identify at least one advertiser device at which the service is available;
a controller configured to confirm whether a service available at the advertiser device and the hash pairs in the received probe request are matched; and
a wireless transmitter configured to transmit at least one probe response to the seeker device, when the service available at the advertiser device and the hash pairs in the received probe request are matched,
**characterized in that** the probe response includes information regarding the hash pairs in the probe request.

## Patentansprüche

1. Verfahren einer Suchereinheit (110) zum Bereitstellen von Diensterfassung in einem drahtlosen Universal-Serial-Bus-Datenübertragungssystem (700), wobei das Verfahren die Schritte aufweist zu:
einem Generieren, durch die Suchereinheit, einer Prüfanfrage (400; 500; 600) für eine Diensterfassung, wobei die Prüfanfrage Hash-Paare für einen Dienst enthält, nach dem die Suchereinheit sucht,
wobei die Hash-Paare mehrere Hash-Werte enthalten, die einem Dienstnamen, USB-Klasseninformationen und untergeordneten Klasseninformationen des Diensts entsprechen, um mindestens eine Anbietereinheit zu identifizieren, bei der der Dienst verfügbar ist;
einem Übertragen der Prüfanfrage durch einen drahtlosen Rundfunksender der Suchereinheit; und
einem Empfangen, durch einen drahtlosen Empfänger der Suchereinheit, von mindestens einer Prüfanfrage von der mindestens einen Anbietereinheit mit einem Hash-Set, das mit den Hash-Paaren in der Prüfanfrage übereinstimmt,
**dadurch gekennzeichnet, dass** die Rückmeldung Informationen in Bezug auf die Hash-Paare in der Prüfanfrage enthält.

2. Verfahren nach Anspruch 1, ferner aufweisend:
ein Identifizieren eines Anbietereinheittyps von der mindestens einen Anbietereinheit (102) auf Grundlage der USB-Klasseninformationen und der untergeordneten Klasseninformationen, die der mindestens einen Anbietereinheit zugehörig sind; und
ein Anzeigen des identifizierten Anbietereinheittyps auf einem Anzeigebildschirm der Suchereinheit (110).

3. Verfahren nach Anspruch 1, wobei ein Generieren der Prüfanfrage (400; 500; 600) aus Folgendem besteht:
einem Definieren eines Sets von Dienstnamen, die einer Mehrzahl von Diensten entsprechen, die bei der mindestens einen Anbietereinheit (102) erhältlich sind;
einem Generieren eines Hash-Sets für jeden des definierten Sets von Dienstnamen, wobei das Hash-Set mindestens eines von entweder dem definierten Dienstnamen, einem USB-Klassencode oder einem untergeordneten Klassencode enthält, die der mindestens einen Anbietereinheit entsprechen; und
einem Anhängen des generierten Hash-Sets in der Prüfanfrage.

4. Verfahren nach Anspruch 3, wobei ein Generieren des Hash-Sets für jeden des definierten Sets von Dienstnamen aufweist:
ein Generieren einer Bitmap eines vordefinierten Hash-Sets für jede USB-Klasse und untergeordnetes Klassen der mindestens einen Anbietereinheit;
ein Eingeben der generierten Bitmap der vordefinierten Hash-Sets in einen Bloom-Filter;
ein Ausführen einer Logikfunktion zwischen jeder der generierten Bitmaps, die der mindestens einen Anbietereinheit (102) entsprechen; und
ein Empfangen, von dem Bloom-Filter, einer sich daraus ergebenden Bitmap, die ein aggregierter Hash-Wert ist, der einem zweiten Hash-Wert entspricht.

5. Verfahren nach Anspruch 4, wobei der zweite Hash-Wert einer Abfolge von Hash-Werten eines Dienstnamens und einer USB-Klasse und einer untergeordneten Klasse entspricht, die jeder der mindestens einen Anbietereinheit (102) zugehörig sind.

6. Verfahren nach Anspruch 3, wobei die Hash-Paare die Hash-Werte enthalten, die in einer vorbestimmten Abfolge aufgelistet sind.

7. Verfahren nach Anspruch 3, wobei ein Generieren des Hash-Sets für jeden des definierten Sets von Dienstnamen ein Erstellen eines Hash-Sets aufweist, das einen umgekehrten Domänennamensystem- DNS, Dienstnamen mit einer Einheitenrolle, einem USB-Klassencode und einem untergeordneten Klassencode als eine Zeichenfolge von Informationen enthält.

8. Verfahren nach Anspruch 1, wobei die Rückmeldung aufweist:
einen Dienstnamen mit einer Anbietereinheitenrolle;
eine Klasseninformationen-Zeichenfolge mit einem USB-Klassencode und einem untergeordneten Klassencode, und
ein Anbietedienst-Attributelement, das Informationen für den Dienst bereitstellt, der durch die mindestens eine Anbietereinheit (102) angeboten wird.

9. Verfahren einer Anbietereinheit (102) zum Bereitstellen von mindestens einem Dienst in einem drahtlosen Universal-Serial-Bus-Datenübertragungssystem (700), wobei das Verfahren die Schritte aufweist zu:
einem Empfangen, durch einen drahtlosen Empfänger der Anbietereinheit, einer Prüfanfrage (400; 500; 600) für eine Diensterfassung von einer Suchereinheit (110), wobei die Prüfanfrage Hash-Paare für einen Dienst enthält, nach dem die Suchereinheit sucht, wobei die Hash-Paare mehrere Hash-Werte enthalten, die einem Dienstnamen, USB-Klasseninformationen und untergeordneten Klasseninformationen des Diensts entsprechen, um mindestens eine Anbietereinheit zu identifizieren, bei der der Dienst verfügbar ist;
einem Bestätigen, dass ein an der Anbietereinheit verfügbarer Dienst und die Hash-Paare in der empfangenen Prüfanfrage übereinstimmen; und
einem Übertragen, durch einen drahtlosen Sender der Anbietereinheit, von mindestens einer Rückmeldung an die Suchereinheit, wenn der an der Anbietereinheit verfügbare Dienst und die Hash-Paare in der empfangenen Prüfanfrage übereinstimmen,
**dadurch gekennzeichnet, dass** die Rückmeldung Informationen in Bezug auf die Hash-Paare in der Prüfanfrage enthält.

10. Vorrichtung einer Suchereinheit (110) zum Bereitstellen von Diensterfassung in einem drahtlosen Universal-Serial-Bus-Datenübertragungssystem (700), wobei die Vorrichtung aufweist:
einen Controller, der konfiguriert ist, um eine Prüfanfrage (400; 500; 600) für eine Diensterfassung zu generieren, wobei die Prüfanfrage Hash-Paare für einen Dienst enthält, nach dem die Suchereinheit sucht, wobei die Hash-Paare mehrere Hash-Werte enthalten, die einem Dienstnamen,
USB-Klasseninformationen und untergeordneten Klasseninformationen des Diensts entsprechen, um mindestens eine Anbietereinheit zu identifizieren, bei der der Dienst verfügbar ist;
einen Rundfunksender, der konfiguriert ist, um die Prüfanfrage zu übertragen; und einen Empfänger, der konfiguriert ist, um von der mindestens einen Anbietereinheit mit einem Hash-Set, das mit den Hash-Paaren in der Prüfanfrage übereinstimmt, mindestens eine Rückmeldung zu empfangen,
**dadurch gekennzeichnet, dass** die Rückmeldung Informationen in Bezug auf die Hash-Paare in der Prüfanfrage enthält.

11. Vorrichtung nach Anspruch 10, ausgelegt für einen Betrieb nach einem der Ansprüche 2 bis 8

12. Vorrichtung einer Anbietereinheit (102) zum Bereitstellen von mindestens einem Dienst in einem drahtlosen Universal-Serial-Bus-Datenübertragungssystem (700), wobei die Vorrichtung aufweist: einen drahtlosen Empfänger, der konfiguriert ist, um von einer Suchereinheit (110) eine Prüfanfrage (400; 500; 600) für eine Diensterfassung zu empfangen, wobei die Prüfanfrage Hash-Paare für einen Dienst enthält, nach dem die Suchereinheit sucht, wobei die Hash-Paare mehrere Hash-Werte enthalten, die einem Dienstnamen, USB-Klasseninformationen und untergeordneten Klasseninformationen des Diensts entsprechen, um mindestens eine Anbietereinheit zu identifizieren, bei der der Dienst verfügbar ist;
einen Controller, der konfiguriert ist, um zu bestätigen, dass ein an der Anbietereinheit verfügbarer Dienst und die Hash-Paare in der empfangenen Prüfanfrage übereinstimmen; und
einen drahtlosen Sender, der konfiguriert ist, um mindestens eine Rückmeldung an die Suchereinheit zu übertragen, wenn der an der Anbietereinheit verfügbare Dienst und die Hash-Paare in der empfangenen Prüfanfrage übereinstimmen,
**dadurch gekennzeichnet, dass** die Rückmeldung Informationen in Bezug auf die Hash-Paare in der Prüfanfrage enthält.

## Revendications

1. Procédé de dispositif chercheur (110) destiné à permettre une découverte de service dans un système de communication USB (bus universel en série) sans fil (700), le procédé comprenant les étapes de :
génération, par le dispositif chercheur, d'une requête de sondage (400 ; 500 ; 600) pour une découverte de service, la requête de sondage incluant des paires de hachage pour un service que le dispositif chercheur recherche,
dans lequel les paires de hachage incluent de multiples valeurs de hachage correspondant à un nom de service, des informations de classe USB et des informations de sous-classe du service pour identifier au moins un dispositif annonceur au niveau duquel le service est disponible ;
transmission, par un émetteur de diffusion sans fil du dispositif chercheur, de la requête de sondage ; et
réception, par un récepteur sans fil du dispositif chercheur, d'au moins une réponse de sondage depuis l'au moins un dispositif annonceur qui a un ensemble de hachage correspondant aux paires de hachage dans la requête de sondage,
**caractérisé en ce que** la réponse de sondage inclut des informations concernant les paires de hachage dans la requête de sondage.

2. Procédé selon la revendication 1, comprenant en outre :
l'identification d'un type de dispositif annonceur de l'au moins un dispositif annonceur (102), sur la base des informations de classe USB et des informations de sous-classe associées à l'au moins un dispositif annonceur ; et
l'affichage du type de dispositif annonceur identifié sur un écran d'affichage du dispositif chercheur (110).

3. Procédé selon la revendication 1, dans lequel la génération de la requête de sondage (400 ; 500 ; 600) comprend :
la définition d'un ensemble de noms de service correspondant à une pluralité de services disponibles au niveau de l'au moins un dispositif annonceur (102) ;
la génération d'un ensemble de hachage pour chacun de l'ensemble défini des noms de service, dans lequel l'ensemble de hachage inclut au moins l'un du nom de service défini, un code de classe USB, et un code de sous-classe correspondant à l'au moins un dispositif annonceur ; et
l'ajout de l'ensemble de hachage généré dans la requête de sondage.

4. Procédé selon la revendication 3, dans lequel la génération de l'ensemble de hachage pour chacun de l'ensemble défini de noms de service comprend :
la génération d'un index bitmap d'un ensemble de hachage prédéfini pour chaque classe USB et sous-classe de l'au moins un dispositif annonceur ;
l'entrée de l'index bitmap généré des ensembles de hachage prédéfinis dans un filtre de Bloom ;
l'exécution d'une fonction logique entre chacun des index bitmap générés correspondant à l'au moins un dispositif annonceur (102) ; et
la réception, depuis le filtre de Bloom, d'un index bitmap résultant qui est une valeur de hachage agrégée correspondant à une deuxième valeur de hachage.

5. Procédé selon la revendication 4, dans lequel la deuxième valeur de hachage correspond à une séquence de valeurs de hachage d'un nom de service et une classe USB et sous-classe associées à chacun de l'au moins un dispositif annonceur (102).

6. Procédé selon la revendication 3, dans lequel les paires de hachage incluent les valeurs de hachage listées dans une séquence prédéterminée.

7. Procédé selon la revendication 3, dans lequel la génération de l'ensemble de hachage pour chacun de l'ensemble défini de noms de service comprend la création d'un ensemble de hachage incluant un nom de service d'un système de nom de domaine, DNS, inversé avec un rôle de dispositif, un code de classe USB et un code de sous-classe en tant de chaîne d'informations.

8. Procédé selon la revendication 1, dans lequel la réponse de sondage comprend :
un nom de service avec un rôle de dispositif annonceur ;
une chaîne d'informations de classe incluant un code de classe USB et un code de sous-classe, et
un élément d'attribut de service d'annonce donnant des informations pour le service proposé par l'au moins un dispositif annonceur (102).

9. Procédé d'un dispositif annonceur (102) destiné à délivrer au moins un service dans un système de communication USB (bus universel en série) sans fil (700), le procédé comprenant les étapes de :
réception, par le récepteur sans fil du dispositif annonceur depuis un dispositif chercheur (110), d'une requête de sondage (400 ; 500 ; 600) pour une découverte de service, la requête de sondage incluant des paires de hachage pour un service que le dispositif chercheur recherche, dans lequel les paires de hachage incluent de multiples valeurs de hachage correspondant à un nom de service, des informations de classe USB et des informations de sous-classe du service pour identifier au moins un dispositif annonceur au niveau duquel le service est disponible ;
confirmation si un service disponible au niveau du dispositif annonceur et les paires de hachage dans la requête de sondage reçue correspondent ; et
transmission, par un émetteur sans fil du dispositif annonceur, d'au moins une réponse de sondage au dispositif chercheur, quand le service disponible au niveau du dispositif annonceur et les paires de hachage dans la requête de sondage reçue correspondent,
**caractérisé en ce que** la réponse de sondage inclut des informations concernant les paires de hachage dans la requête de sondage.

10. Appareil d'un dispositif chercheur (110) destiné à effectuer une découverte de service dans un système de communication USB (bus universel en série) sans fil (700), l'appareil comprenant :
une unité de commande configurée pour générer une requête de sondage (400 ; 500 ; 600) pour une découverte de service, la requête de sondage incluant des paires de hachage pour un service que le dispositif chercheur recherche, dans lequel les paires de hachage incluent de multiples valeurs de hachage correspondant à un nom de service,
des informations de classe USB et des informations de sous-classe du service pour identifier au moins un dispositif annonceur au niveau duquel le service est disponible ;
un émetteur de diffusion configuré pour transmettre la requête de sondage ; et
un récepteur configuré pour recevoir au moins une réponse de sondage depuis l'au moins un dispositif annonceur qui a un ensemble de hachage correspondant aux paires de hachage dans la requête de sondage,
**caractérisé en ce que** la réponse de sondage inclut des informations concernant les paires de hachage dans la requête de sondage.

11. Appareil selon la revendication 10, adapté pour fonctionner selon l'une quelconque des revendications 2 à 8.

12. Appareil d'un dispositif annonceur (102) destiné à délivrer au moins un service dans un système de communication USB (bus universel en série) sans fil (700), dans lequel l'appareil comprend : un récepteur sans fil configuré pou rrecevoir depuis un dispositif chercheur (110) une requête de sondage (400 ; 500 ; 600) pour une découverte de service, la requête de sondage incluant des paires de hachage pour un service que le dispositif chercheur recherche, dans lequel les paires de hachage incluent de multiples valeurs de hachage correspondant à un nom de service, des informations de classe USB et des informations de sous-classe du service pour identifier au moins un dispositif annonceur au niveau duquel le service est disponible ;
une unité de commande configurée pour confirmer si un service disponible au niveau du dispositif annonceur et les paires de hachage dans la requête de sondage reçue correspondent ; et
un transmetteur sans fil configuré pour transmettre au moins une réponse de sondage au dispositif chercheur, quand le service disponible au niveau du dispositif annonceur et les paires de hachage dans la requête de sondage reçue correspondent,
**caractérisé en ce que** la réponse de sondage inclut des informations concernant les paires de hachage dans la requête de sondage.
